# EUROPEAN PATENT APPLICATION

(11) **EP 4 141 830 A1**
(43) Date of publication of application: **01.03.2023**
(21) Application number: 21306178.1
(22) Date of filing: 31.08.2021
(51) Int. Cl.: G07D 7/20

(54) **METHOD FOR DETECTING A FORGERY OF AN IDENTITY DOCUMENT**

(71) Applicant: Thales Dis France SAS, 92190 Meudon (FR)
(72) Inventor: BAZIN, Pascal, 92190 Meudon (FR)
(74) Representative: Bricks, Amélie

(57) **Abstract**

The present invention relates to a method for detecting a forgery of an identity document including a visual security element, comprising performed by a processor of a security device :
a) selecting (D1) at least one region of interest of a captured image of at least part of said identity document, said region of interest comprising at least one edge of said security element,
b) creating (D2) a composite image from said selected regions of interest using a predetermined process of image combination,
c) generating (D3) a filtered image by applying to said composite image, a digital image filtering revealing geometrical objects created by a replacement or a displacement of said security element in said identity document,
d) from said filtered image, using a dedicated neural network, detecting (D4) a forgery of the identity document based on the geometrical objects revealed by said digital image filtering,
said dedicated neural network having been trained with a training data set such that an input to the dedicated neural network is a filtered image for a given identity document and an output of the dedicated neural network is an indicator of the forgery or not of said given identity document, wherein said output is based on geometrical objects in said input filtered image created by a replacement or a displacement of a security element in said given identity document and revealed by said digital image filtering, thereby producing a set of parameters for the dedicated neural network with which the processor of the security device has been programmed.

## Description

### BACKGROUND OF THE INVENTION

The present invention relates generally to protection against forgery of identity documents, and in particular to a method for detecting a tampering of a visual security element of such an identity document.

Identity documents are used all over the world in order to enable anyone to prove his identity, for example at a border checkpoint or in the frame of an administrative procedure. In order to prevent any fraudulent use of an identity document by a fraudster reusing a stolen identity document or a forged identity document, identity documents usually include at least one visual security element enabling an authority to check that the bearer of the identity document is its rightful owner, such as a portrait of the owner or a print of its fingerprints. Therefore, in order to reuse stolen identity documents, a fraudster needs to replace such a visual security element by a corresponding one corresponding to himself, for example by swapping a portrait of the original owner of the document with his own portrait. In order to prevent such a fraudulent use of tampered or forged identity documents, professionals such as customs employees are trained to recognize such a tampering of the visual security elements of an identity documents.

A problem is that, identity documents are also used as a proof of identity in online administrative procedures or in situations where the employee receiving the identity document is not capable of detecting a tampering of the identity document, such as subscribing to a mobile phone contract in a shop Identity verification in such cases only perform an unattended machine-based verification of identity documents based on digital processing of identity documents and character recognition. Such machine-based processes perform some verifications of the identity documents, for example using OCR, in order to detect a forgery of the identity documents but they do not involve any verification that the document bearer is the rightful owner of the identity document. As a result, they cannot prevent a fraudster from using a genuine identity document in which the visual security element has been swapped.

Therefore, there is a need for a machine-based, unattended, identity verification method able to detect such a tampering of the visual security element of the verified identity documents.

### SUMMARY

For this purpose and according to a first aspect, this invention therefore relates to a method for detecting a forgery of an identity document including a visual security element, comprising performed by a processor of a security device :
a) selecting at least one region of interest of a captured image of at least part of said identity document, said region of interest comprising at least one edge of said security element,
b) creating a composite image from said selected regions of interest using a predetermined process of image combination,
c) generating a filtered image by applying to said composite image, a digital image filtering revealing geometrical objects created by a replacement or a displacement of said security element in said identity document,
d) from said filtered image, using a dedicated neural network, detecting a forgery of the identity document based on the geometrical objects revealed by said digital image filtering,
said dedicated neural network having been trained with a training data set such that an input to the dedicated neural network is a filtered image for a given identity document and an output of the dedicated neural network is an indicator of the forgery or not of said given identity document, wherein said output is based on geometrical objects in said input filtered image created by a replacement or a displacement of a security element in said given identity document and revealed by said digital image filtering, thereby producing a set of parameters for the dedicated neural network with which the processor of the security device has been programmed.

Such a method enables an automatic detection of the tampering of an identity document in which a visual security element has been replaced. It does not require any human intervention.

The security element may be a biometric image, which is unique to a holder of the identity document.

The security element may be among a portrait, a fingerprint, an Optically Variable Image Device or a text element.

Said digital image filtering may be based on color gradient and laplacian measures computation.

Said digital image filtering may be based on Mexican hat filtering, Canny edge detection, blurriness enhancement or reduction, convolution matrix filtering, Histogram of oriented gradients or Hough line transform.

Such filtering enables to produce an image displaying, in case of forgery, a specific pattern than can be recognized by the neural network in order to efficiently classify the identity document as forged or not.

The method according to the first aspect may comprise previously:
- obtaining from a plurality of training identity documents, forged or not, a plurality of filtered identity document images, comprising, for each training identity document of said plurality of training identity documents :
   - selecting at least one region of interest of a captured image of at least part of said training identity document, said region of interest comprising at least one edge of said security element,
   - creating a composite identity document image from said selected regions of interest using said predetermined process of images combination,
   - generating a filtered image by applying, to said composite identity document image, a digital image filtering revealing geometrical objects created by a replacement or a displacement of a security element in said training identity document,
- creating said training data set by recording in the training data set each obtained filtered image and for each filtered image whether the identity document from which it has been obtained is forged or not ;
   and wherein the step of training the dedicated neural network with said training data set comprises, for each filtered image of the training data set:
   - collecting the geometrical objects in the filtered image,
   - classifying said geometrical objects collected in the filtered image as indicative or not of the forgery of the identity document from which the filtered image has been obtained.

Such a training data set and such a training of the dedicated neural network enables to obtain a neural network training to classify an identity document as forged or not with a high level of confidence.

Said geometrical objects may comprise vertical and horizontal lines created by a replacement or a displacement of a security element.

The method according to the first aspect, wherein each identity document belongs to a document class among a plurality of document classes each characterized by at least one of a type of identity document, an originating country of identity document, a version number of identity document, may comprise a determination by said dedicated neural network of the document class of said identity document and the step d) of detecting a forgery of the identity document by said dedicated neural network may depend on the determined document class for said identity document.

This may improve the efficiency of the classification performed by the dedicated neural network when identity documents may be of different classes of identity documents leading to very different patterns in composite images in case of forgery, for example because they use very different visual security elements.

The step of programming the processor of the security device may comprise storing the set of parameters in a memory connected to the processor.

Said identity document may be an identity card, a passport, a driver license, a resident card, a healthcare insurance card or a bank card.

Said dedicated neural network may be a convolutional neural network.

According to a second aspect, this invention therefore relates also to a computer program product directly loadable into the memory of at least one computer, comprising software code instructions for performing the steps of the method according to the first aspect, when said computer program product is run on the at least one computer.

According to a third aspect, this invention therefore relates also to a security device comprising:
- a network interface configured to acquire captured images of at least part of said identity document to be checked and to provide the captured images to a processor,
- at least one memory,
- the processor configured to execute the steps of the method according to the first aspect.

### BRIEF DESCRIPTION OF THE DRAWINGS

FIG. 1 is an illustration of an identity document according to an embodiment of the present invention;
FIG. 2 is a schematic illustration of a security device according to an embodiment of the present invention;
FIG. 3a is an illustration of an untampered identity document and the corresponding tampered identity document according to an embodiment of the present invention;
FIG. 3b is an illustration of the generation of a shadow at the edge of the replacement portrait in a tampered identity document versus the untampered identity document according to an embodiment of the present invention;
FIG. 4a is an illustration of a image filtering applying a Hough line transform to the image of a untampered identity document and to the image of the corresponding tampered identity document according to an embodiment of the present invention;
FIG. 4b is an illustration of a image filtering applying a differential gradient transform to the image of a untampered identity document and to the image of the corresponding tampered identity document according to an embodiment of the present invention;
Figure 5 illustrates schematically a method for detecting a forgery of an identity document according to an embodiment of the present invention;
Figure 6 is an illustration of a selection of regions of interest of the filtered image according to an embodiment of the present invention;
Figure 7 is an illustration of a creation of a composite image from said selected regions of interest according to an embodiment of the present invention;
Figure 8 illustrates schematically the training steps to train a dedicated neural network according to an embodiment of the present invention.

### DETAILED DESCRIPTION OF THE INVENTION

The invention relates to a method and an associated security device for detecting a forgery of an identity document including a visual security element.

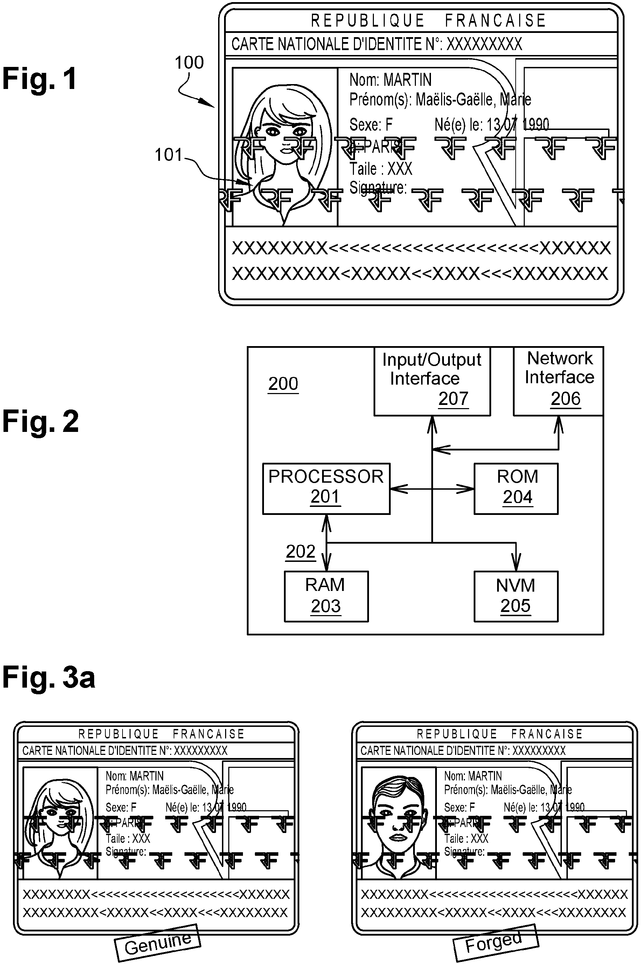

Such an identity document may for example be an identity card, a passport, a driver license, a resident card, a healthcare insurance card, a bank card. Its visual security element may for example be any biometric image unique to the rightful holder of the identity document, such as his portrait or fingerprints. It may also be an optically variable image device (OVID) either including identity information of the owner of the document, such as a date of birth, or aiming at proving the authenticity of the identity document. The visual security element may also be text elements such as the name, address and date of birth of the owner of the document. **Figure 1** shows an example in which the identity document is a national identity card 100 and the visual security element of the card is a portrait 101 of the rightful owner of the identity document.

The aim of the method according to the invention is to make a security device able, when verifying the identity document, to detect a swapping of the original visual security element of the identity document with another visual security element, either a forged one or a genuine one taken from another identity document. For example, when the visual security element is a portrait, the method according to the invention enables the security device to detect a swapping of the genuine portrait of the rightful owner of the identity document with another portrait, either created by a fraudster or taken from another genuine identity document corresponding to a different owner.

The verification of the identity document may be an unattended remote online verification from a picture of the identity document, such as the verification performed in the frame of the online enrollment of a customer opening a bank account in an online bank, or in the frame of an online car-rental. It may also be an unattended verification when buying goods in a shop such as a mobile phone with a monthly subscription. In such a case, the security device may be any device including processing means for detecting a forgery of the identity document from a picture of the document.

**Figure 2** is a schematic illustration of such a security device 200. It may include computation means such as a CPU or a processor 201 connected via a bus 202 to a random access memory (RAM) 203, a read-only memory (ROM) 204, and/or a nonvolatile memory (NVM) 205. The security device may further include a network interface 206 used to connect it to various forms of wireless networks, e.g., wide-area networks, WiFi networks. Alternatively, it may connect to networks via wired network connections such as Ethernet. The security device may receive pictures of identity documents to be checked through this network interface, for example from a distant server on the internet or on a company private network. The security device may also include an input/output interface 207 providing interfaces to an administrator of the device, such as one or more screens, loudspeakers, a mouse, tactile surfaces, a keyboard etc...

In some cases, such a security device may have a physical access to the identity document to be verified. It can be for example a scanner of documents according to the MRTD format, such as a passport scanner used in customs or airports. It can be an identity document reader such as the ones used in banking agencies in order to verify customers' identity. In such a case the security device includes means of acquisition of a picture of the document, such as scanner or a camera.

Swapping the visual security element of an identity document cannot be performed, most of the time, with a one-to-one correspondence of each pixel of the original security element with a pixel of the replacement security element. It may induce local discontinuities at the edge of the security element between the security element itself and the background of the identity document or nearby other visual elements of the identity document. An example is shown on **Figure 3a****,** which shows on the left an original untampered identity document including a portrait of its owner, and, on the right, the corresponding tampered identity document in which the portrait has been replaced by another portrait that is slightly displaced compared to the position of the portrait in the untampered identity document. In this example, the displacement of the portrait creates visible discontinuities of the background image of the identity document on all four edges of the portrait.

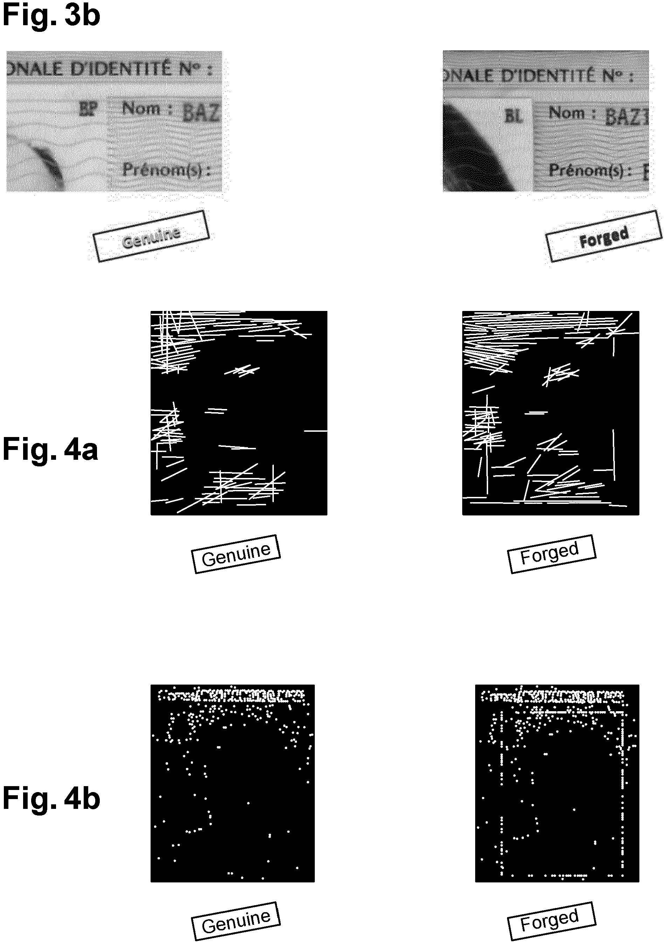

Swapping the visual security element of an identity document may also unwillingly introduce additional alterations of the identity document at the edge of the replaced visual security element. **Figure 3b** gives an example in which the replacement of an original portrait, shown on the left, by another portrait, on the right, generates a shadow at the edge of the replacement portrait.

In order to detect a forgery of the visual security element of an identity document, the main idea of the invention is to detect geometrical objects such as lines and geometrical artifacts generated by such discontinuities. In order to make such geometrical objects visible, a series of image filtering is applied to the image of the identity document, and particularly to the edges of the visual security element. Such filtering may for example include resizing, color balance correction, blurriness emphasis or contour extraction. An example is given on **Figure 4a****,** which shows on the left the lines detected by applying as last image filtering a Hough line transform to the image of the original untampered identity document of Figure 3a, and on the right the lines detected by applying as last image filtering a Hough line transform to the image of the forged identity document of Figure 3a. In the case of the forged identity document, the Hough line transform detects in the image additional lines at the edges of the displaced portrait, which can be interpreted as a marker of a forged document. Another example is given on **Figure 4b****,** which shows on the left in white the regions of high intensity gradient detected by applying as last image filtering a differential gradient transform to the image of the original untampered identity document of Figure 3b, and on the right in white the regions of high intensity gradient detected by applying as last image filtering a differential gradient transform to the image of the forged identity document of Figure 3b. Similarly to the result obtained with the Hough line transform, the differential gradient transform reveals lines that appear at the edges of the replaced portrait.

Classifying an output image of the digital image filtering as corresponding to a forged identity document or not may be quite straightforward for a human but it may prove difficult to define criteria for a deterministic determination by the security device of whether this output image corresponds to a forged identity document or not. Therefore, the invention relies for such a classification on a neural network properly trained to perform such a classification.

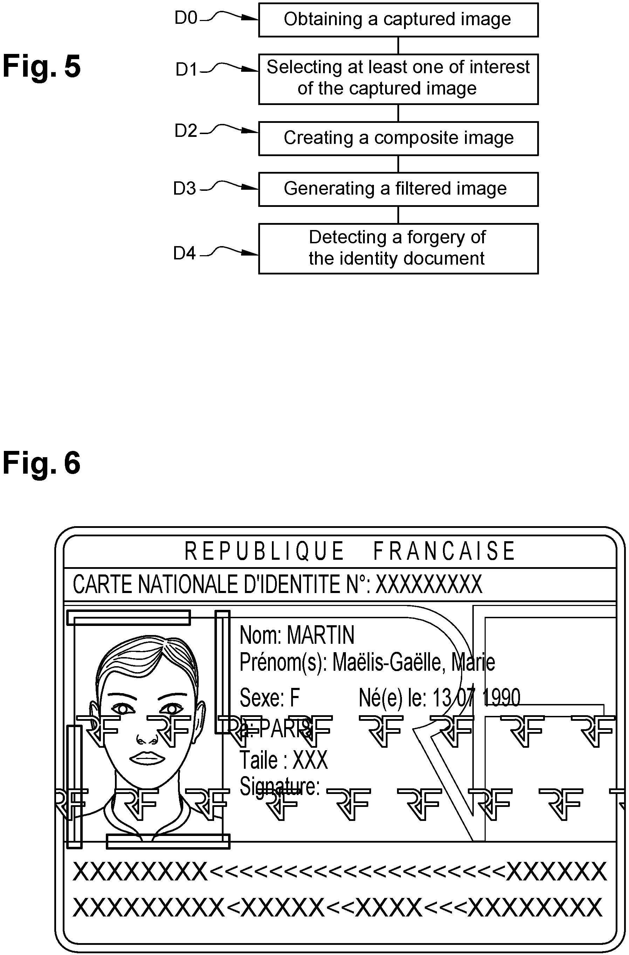

The following paragraphs describe with more details the steps of a method according to the invention for detecting a forgery of an identity document, as shown on **Figure 5****.**

In an image capture step D0, the security device either captures an image of at least part of the identity document, or receives such a captured image from a distant device or server.

In a first detection step D1, the processor of the security device selects at least one region of interest of a captured image of at least part of the identity document comprising at least one edge of said security element. It may for example select several regions of the captured image, each covering at least partially one edge of the security element. **Figure 6** shows an example in which four regions are selected, shown with a black frame, each covering a portion of a different edge of the portrait of the identity document.

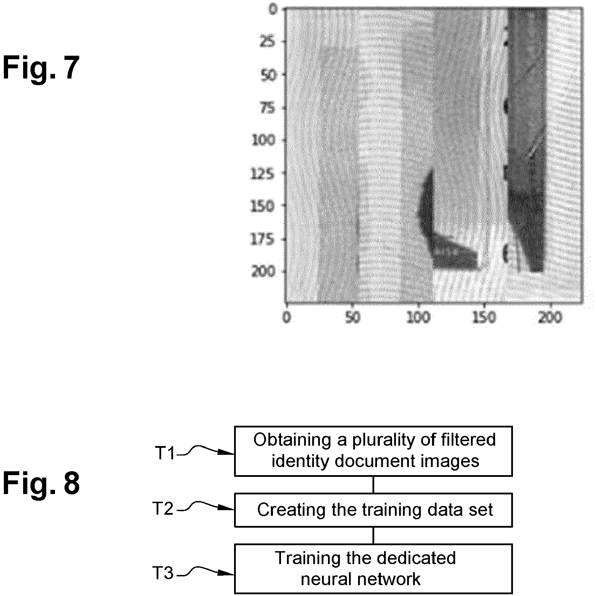

In a second detection step D2, the processor of the security device creates a composite image from said selected regions of interest using a predetermined process of image combination. For example, it may collate the selected regions of interest one next to the other in a predetermined order and/or according to a specific layout. By doing so, the composite image is focused on the regions of interest in which the geometrical objects indicating a forgery may be revealed by a digital image filtering applied in the next detection step D3. **Figure 7** gives an example in which the four regions of interest of Figure 6 are all placed vertically and assembled together to form the composite image. When only one region of interest has been selected at the first detection step, for example a whole image with its four edges, the creation of the composite image may consist in a rescaling on the region of interest in order to obtain a composite image focused on this region of interest and of the correct size for the following step of the process.

In a third detection step D3, the processor of the security device generates a filtered image by applying to said composite image a digital image filtering revealing geometrical objects, such as vertical and horizontal lines, created by a replacement or a displacement of the security element in the identity document. These geometrical objects should not be present in the background pattern of the identity document. The digital image filtering may be selected in order to specifically make visible background disruptions in the selected regions of interest of the composite image.

Such a digital image filtering may for example be based on color gradient and laplacian measures computation. It may for example be based on contour-extraction filtering such as Mexican hat filtering or Canny edge detection, on blurriness enhancement or reduction, on convolution matrix filtering, on Histogram of oriented gradients, on Hough line transform or on differential gradient computation. Several filters and algorithms may be applied accumulatively.

In a fourth detection step D4, the processor of the security device, from said filtered image, using a dedicated neural network, detects a forgery of the identity document based on the geometrical objects revealed by said digital image filtering. The dedicated neural network may for example be a convolutional neural network. Based on these geometrical objects, the dedicated neural network is able to classify the composite image as indicative of a forgery or not. For example, in the case of the composite image of Figure 7 and using Hough line transform as shown on Figure 4a, the filtered image obtained from a forged identity document will show four long vertical lines, approximately equally spaced, corresponding to the four edges of the portrait used as a replacement of the original portrait; and the dedicated neural network is trained to recognize such a pattern as indicative of a forgery of the identity document.

A successful neural network has parameters set such that for a given identity document as input, the classification of the identity document as forged or not, provided output, has a high probability of being correct. In order to be able to perform efficiently such a classification, the dedicated neural network shall have been trained with a training data set. Training of the neural network is an exercise in adjusting weights of the neural network based on the training data set so that when the neural network is provided an input, the output provided meets that stated goal. For the training to work well, a large number of data points should be provided. The training is such that an input to the dedicated neural network is a filtered image for a given identity document and an output of the dedicated neural network is an indicator of the forgery or not of said given identity document, this output being based on geometrical objects in this input filtered image created by a replacement or a displacement of the visual security element in the identity document and revealed by the digital image filtering, thereby producing a set of parameters for the dedicated neural network with which the processor of the security device has been programmed.

More precisely, the method includes the following training steps to be performed before the first execution of the detection step described above and illustrated on **Figure 8****.**

The training data set needed to train the dedicated neural network shall first be generated. In a first training step T1, a plurality of filtered identity document images are obtained from a plurality of training identity documents, forged or not. This step comprises, for each training identity document of said plurality of training identity documents:
- selecting at least one region of interest of a captured image of at least part of said training identity document, said region of interest comprising at least one edge of said security element,
- creating a composite identity document image from said selected regions of interest using said predetermined process of images combination,
- generating a filtered image by applying, to said composite identity document image, a digital image filtering revealing geometrical objects created by a replacement or a displacement of a security element in said training identity document.

Then in a second training step T2, the training data set is created by recording in the training data set each obtained filtered image and for each filtered image whether the training identity document from which it has been obtained is forged or not.

Then in a third training step T3, the dedicated neural network is trained with the training data set using a neural network training algorithm. Neural network training algorithms are described in R. Benadjila, E. Prouff_, R. Strullu, E. Cagli, C. Dumas, Study of deep learning techniques for side-channel analysis and introduction to ascad database (2018). In summary, training of a neural network is generally an iterative process to determine the weight of each neuron that makes up the neural network to minimize a cost function.

Such a step comprises, for each filtered image of the training data set:
- collecting the geometrical objects in the filtered image,
- classifying the geometrical objects collected in the filtered image as indicative or not of the forgery of the training identity document from which the filtered image has been obtained.

Training of a neural network is a process of accepting input training data to determine values for weights and other parameters that control the behavior of the neural network. When the training is complete, the processor of the security device may be programmed by storing the set of weights and parameters in one of the memories connected to the processor. Having programmed the processor with the parameters determined from the training data set, the security device 200 may be deployed for its intended purpose, i.e., detecting a forgery of identity documents.

In an embodiment, the neural network may be trained with a single data set. In another embodiment, identity documents are of different documents classes, each characterized by at least one of a type of identity document, an originating country of identity document and a version number of identity document. In this embodiment, the dedicated neural network can be trained separately for each document class. In such a case, the method of detection of a forgery of an identity document includes an additional step of determination by the neural network of the document class of this identity document, and, at the fourth detection step D4, the detection of a forgery of the identity document depends on the document class determined for the identity document. This may improve the efficiency of the classification performed by the dedicated neural network when identity documents may be of different classes of identity documents leading to very different patterns in composite images in case of forgery, for example because they use very different visual security elements.

## Claims

1. A method for detecting a forgery of an identity document (100) including a visual security element (101), comprising performed by a processor (201) of a security device (200) :
a) selecting (D1) at least one region of interest of a captured image of at least part of said identity document, said region of interest comprising at least one edge of said security element,
b) creating (D2) a composite image from said selected regions of interest using a predetermined process of image combination,
c) generating (D3) a filtered image by applying to said composite image, a digital image filtering revealing geometrical objects created by a replacement or a displacement of said security element in said identity document,
d) from said filtered image, using a dedicated neural network, detecting (D4) a forgery of the identity document based on the geometrical objects revealed by said digital image filtering,
said dedicated neural network having been trained with a training data set such that an input to the dedicated neural network is a filtered image for a given identity document and an output of the dedicated neural network is an indicator of the forgery or not of said given identity document, wherein said output is based on geometrical objects in said input filtered image created by a replacement or a displacement of a security element in said given identity document and revealed by said digital image filtering, thereby producing a set of parameters for the dedicated neural network with which the processor of the security device has been programmed.

2. The method of claim 1, wherein the security element is a biometric image, which is unique to a holder of the identity document.

3. The method of claim 1 or 2, wherein the security element is among a portrait, a fingerprint, an Optically Variable Image Device or a text element.

4. The method of any one of claims 1 to 3, wherein said digital image filtering is based on color gradient and laplacian measures computation.

5. The method of any one of claims 1 to 4, wherein said digital image filtering is based on Mexican hat filtering, Canny edge detection, blurriness enhancement or reduction, convolution matrix filtering, Histogram of oriented gradients or Hough line transform.

6. The method of any one of claims 1 to 5, comprising previously:
• obtaining (T1) from a plurality of training identity documents, forged or not, a plurality of filtered identity document images, comprising, for each training identity document of said plurality of training identity documents :
- selecting at least one region of interest of a captured image of at least part of said training identity document, said region of interest comprising at least one edge of said security element,
- creating a composite identity document image from said selected regions of interest using said predetermined process of images combination,
- generating a filtered image by applying, to said composite identity document image, a digital image filtering revealing geometrical objects created by a replacement or a displacement of a security element in said training identity document,
• creating (T2) said training data set by recording in the training data set each obtained filtered image and for each filtered image whether the identity document from which it has been obtained is forged or not ;
and wherein the step of training the dedicated neural network with said training data set comprises, for each filtered image of the training data set:
- collecting the geometrical objects in the filtered image,
- classifying said geometrical objects collected in the filtered image as indicative or not of the forgery of the identity document from which the filtered image has been obtained.

7. The method of any one of claims 1 to 6, wherein said geometrical objects comprise vertical and horizontal lines created by a replacement or a displacement of a security element.

8. The method of claim 6 or 7, wherein each identity document belongs to a document class among a plurality of document classes each **characterized by** at least one of a type of identity document, an originating country of identity document, a version number of identity document, comprising a determination by said dedicated neural network of the document class of said identity document and wherein the step d) of detecting a forgery of the identity document by said dedicated neural network depends on the determined document class for said identity document.

9. The method of any one of claims 1 to 8, wherein programming the processor of the security device comprises storing the set of parameters in a memory connected to the processor.

10. The method of any one of claims 1 to 9, wherein said identity document is an identity card, a passport, a driver license, a resident card, a healthcare insurance card or a bank card.

11. The method of any one of claims 1 to 10, wherein said dedicated neural network is a convolutional neural network.

12. A computer program product directly loadable into the memory of at least one computer, comprising software code instructions for performing the steps of any one of claims 1 to 11, when said computer program product is run on the at least one computer.

13. An security device (200) comprising:
- a network interface (206) configured to acquire captured images of at least part of said identity document to be checked and to provide the captured images to a processor (201),
- at least one memory (203, 204, 205),
- the processor (201) configured to execute the steps of any of claims 1 to 11.
